# EUROPEAN PATENT SPECIFICATION

(11) **EP 3 960 278 B1**
(45) Date of publication and mention of the grant of the patent: **16.07.2025**
(21) Application number: 20193849.5
(22) Date of filing: 01.09.2020
(51) Int. Cl.: B01D 53/50, B01D 53/83, B01J 4/00, B05B 1/00, F23J 15/00

(54) **REACTOR FOR CLEANING FLUE GASES AND METHOD FOR OPERATING A REACTOR**
REAKTOR ZUR REINIGUNG VON RAUCHGASEN AND VERFAHREN ZUM BETREIBEN EINES REAKTORS
RÉACTEUR POUR LE NETTOYAGE DES GAZ DE COMBUSTION ET PROCÉDÉ DE FONCTIONNEMENT D'UN RÉACTEUR

(43) Date of publication of application: 02.03.2022
(73) Proprietor: Doosan Lentjes GmbH, 40880 Ratingen (DE)
(72) Inventor: NARIN, Oguzhan, 45549 Sprockhövel (DE); YILDIZ, Hasan, 47805 Krefeld (DE)
(74) Representative: Feucker, Max Martin

(56) References cited:
- EP-A1- 3 581 258
- WO-A1-2013/055285
- WO-A1-2013/166077
- WO-A1-96/31412
- GB-A- 2 040 271
- US-A1- 2012 240 761
- US-A1- 2018 306 509

## Description

The present invention relates to a reactor for cleaning flue gases by injecting dry or quasi-dry sorbent into a flue gas stream, comprising a flue gas inlet at the bottom of the reactor, an outlet at the top of the reactor, a dry sorbent injection system with at least one dry sorbent outlet for injecting dry sorbent into the reactor, the at least one dry sorbent outlet being arranged between the flue gas inlet and the outlet, and at least one liquid injection system, the liquid injection system comprising at least one spray nozzle having at least one spray opening for supplying atomized liquid into the reactor between the flue gas inlet and the outlet. The invention also relates to a method for operating a reactor for cleaning flue gases, comprising the steps of supplying a flue gas at the bottom of the reactor, supplying a dry sorbent into the reactor and supplying atomized liquid through a spray opening of a spray nozzle into the reactor. Such a spray nozzle for a reactor comprises a first inlet for a liquid and at least one spray opening for automizing the liquid. In order to operate such a spray nozzle, the liquid is pressurized and supplied through the spray opening of the spray nozzle. The invention also relates to a retrofit kit for a spray nozzle in a reactor.

The combustion gases produced in a combustion chamber are usually introduced as flue gas through the inlet into the reactor. A dry sorbent is injected into the flue gas, for example calcium oxide or calcium hydroxide powder is injected into the flue gas. According to the prior art and also according to an embodiment of the invention, the dry sorbent containing flue gas may be forced through a venturi system, so that a so called fluidized bed may be formed downstream of the venturi system in order to enhance the sorption process.

In order to enhance the sorption process, it is also known to inject (atomized) water into the fluidized bed downstream or upstream of the venturi system. Alternatively, it is known to moisten the dry sorbent before injection into the reactor.

After the sorbent comprising flue gas leaves the reactor through the outlet it is advanced to a separator/filter, in which solid particles are separated from the stream.

A reactor with the above described features is for example known from EP 3 581 258 A1. Spray nozzles for other applications are known from GB 2 040 271 A, WO 2013/055285, WO 96/31412 A1 and WO 2013/166077 A1.

It has been found that material deposits on the outer surface of the spray nozzle. These deposits may grow with time and may affect the spray pattern of the atomized liquid in an undesired way, which may affect the sorption process negatively. Currently, these depositions are removed manually, when the reactor is not operated.

Accordingly, it is an object of the present invention that the process of cleaning (desulfurization) of the flue gas is performed more efficiently. In particular, it is an object of the present invention to avoid altering of the spray pattern of the spray nozzle.

This object is achieved with a reactor and a method for operating a reactor according to the respective independent claim. The dependent claims and the description disclose preferred embodiments, wherein single features of the preferred embodiments can be combined with each other in a technically meaningful manner. In particular, features disclosed with regard to the method can be applied to the reactor or vice versa.

The object is in particular achieved with a reactor having the before described features, wherein at least one scraper is arranged outside an outer surface of the spray nozzle, wherein the outer surface and the scraper are moveable relative to each other and the relative movement is a rotational movement around a central axis of the spray nozzle.

The object is also achieved with a method with the above described features, wherein contaminations/depositions on an outer surface of the spray nozzle are removed by moving a scraper and the outer surface of the spray nozzle relative to each other, wherein the relative movement is a rotational movement around a central axis of the spray nozzle.

With other words, the invention suggests to arrange a scraper inside the reactor close to a part of the outer surface of the spray nozzle, so that the contaminations/depositions on the outer surface are scraped off by moving the scraper and the outer surface of the spray nozzle relative to each other. Accordingly, a scraping edge of the scraper should be arranged in contact with the outer surface of the spray nozzle or within a short distance (within a few mm or cm). Therefore, contaminations/depositions can be removed from the outer surface during operation of the reactor, so that there is no need to shut-down the reactor for manually removing the contamination/depositions. As most of the known spray nozzles have a circular outer cross section, the relative movement between the scraper and the outer surface of the spray nozzle is a rotational movement around a central axis of the spray nozzle. Accordingly, the scraper and/or the outer surface can be moved in a rotational manner around the central axis of the spray nozzle.

Principally, the whole spray nozzle may be moved (in particular rotated) relative to a stationary scraper, so that an outer surface (meaning at least a part of the surface arranged inside the reactor) of the spray nozzle is moved. Alternatively, the scraper is moveable and the outer surface of the spray nozzle is stationary, so that the scraper can be moved (in particular rotated) relative to the stationary surface.

The outer surface of the spray nozzle may be formed by a member (such as a pipe, tube, a sleeve or similar fluidly connecting the inlet with the spray nozzle), which is stationary arranged with regard to the inlets and the spray opening. In a preferred embodiment the outer surface of the spray nozzle is formed by an outer shell, which is arranged in a circumferential direction around the member of the spray nozzle connecting the inlet and the spray outlet and being arranged within the reactor. Such an outer shell, which can for example be at least partly embodied by a sleeve, pipe or similar, can be mounted in already existing reactor as part of the retrofit kit.

In case the scraper is moveable relative to the outer surface of the nozzle, the outer shell may be stationary fixed with regard to the member (also referred to as stationary housing) connecting the inlet and the spray nozzle.

In case the outer surface of the spray nozzle is moveable relative to the scraper, the outer shell is to be arranged in a moveable way with regard to the stationary housing of the spray nozzle. In this case, bearings (which may be part of the retrofit kit) may be arranged between the outer surface of the stationary housing of the spray nozzle and the inner surface of the outer shell, thereby supporting the relative movement. Additionaly or alternatively to this support a bearing (which may be part of the retrofit kit) can be mounted on an inside of the reactor wall surrounding the stationary housing of the spray nozzle in a circumferential manner, wherein the bearing supports the rotational movement of the outer shell. Such a bearing can be embodied as flange.

In case the scraper is movably mounted, it is suggested that a bearing surrounding the outer surface of the spray nozzle in a circumferential direction is mounted on an inside of the reactor wall. Such a bearing can be embodied as flange. Therefore, the in particular rotational movement of the scraper is supported by the bearing, which can even be mounted on the reactor wall.

While it is principally sufficient that the scraper only extends along a part of the outer surface of the spray nozzle and in particular along a part of the outer surface at which most depositions occur, in a preferred embodiment the scraper extends along the whole lengths of the outer circumferential surface of the nozzle, which is arranged inside the reactor. This way, most of the outer surface of the spray nozzle can be cleaned by the scraper.

Usually, the spray opening of the spray nozzle is arranged in an end face of the spray nozzle. In this regard, it is preferred that the scraper at least partially extends along the end face of the spray nozzle, so that depositions/contaminations close to the spray opening of the spray nozzle may be removed by the scraper. In particular, it is preferred that the scraper extends in a radial direction from the outside towards the central spray opening, wherein this part of the scraper extends as close as possible to the spray opening without affecting the spray pattern of the spray nozzle.

In order to move the outer surface the spray nozzle or its outer shell may be connected directly or indirectly via a gear to a drive. In order to move the scraper, the scraper may be connected directly or indirectly via a gear to a drive.

In one embodiment the spray nozzle may extend only linearly, in which case the spray nozzle is preferably oriented horizontally within the reactor, so that there is a 90° angle between the main flow direction of the flue gas and the extension of the nozzle. In this case, the scraper may have exactly one integrally build section extending along the spray nozzle within the reactor.

In an alternative embodiment the spray nozzle has a first spray nozzle section and a second spray nozzle section cranked to the first spray nozzle section. The first spray nozzle section defining a first central spray nozzle axis is usually mounted in a horizontal manner within the reactor and the second spray nozzle section defining a second central spray nozzle section is oriented inclined to the first spray nozzle section, wherein an angle between the first central spray nozzle axis and the second central spray nozzle axis is between 20° and 90°, preferably between 30° and 60°, so that the liquid is injected with an angle between 0° and 70°, preferably between 30° and 60° to the main flow direction of the flue gas (through the spray opening at an end face of the second spray nozzle section), thereby enhancing the sorption process.

In order that both sections of the spray nozzle are regularly cleaned, the scraper may have a first scraper section assigned to the first spray nozzle section and a second scraper section assigned to the second spray nozzle section, wherein the first scraper section may extend along the whole length of the first spray nozzle section and the second scraper section may extend along the whole second nozzle section.

In case the scraper is driven relative to a stationary surface of the spray nozzle, the first scraper section is coupled to the second scraper section by a gear, transferring a driven rotational movement of the first scraper section into a rotational movement of the second scraper section. This way, only one section of the scraper needs to be actively driven, while the preferably rotational movement is transferred to the other scraper section.

Alternatively or additionally, the outer shell may have a first outer shell section assigned to the first spray nozzle section and a second outer shell section assigned to the second spray nozzle section. The first and second outer shell sections may be part of the retro fit kit and be arranged with a distance to the stationary housing of the spray nozzle.

In case the outer shell is driven relative to the scraper, the first outer shell section is coupled to the second outer shell section by a gear, transferring a driven rotational movement of the first outer shell section into a rotational movement of the second outer shell section. This way, only one section of the outer shell needs to be actively driven, while the preferably rotational movement is transferred to the other outer shell section

For example, the gear (between the scraper sections or between the outer shell sections) may be embodied by a rubber sleeve or gaiter (also called boot), which ends are moveably mounted on the outer surface of the respective section of the spray nozzle and are connected to the respective scraper (or outer shell) sections preferably in a frictional locked manner. Alternatively, the gear may comprise at least two (or exactly two) combing bevel wheels, which are connected to one end of the respective scraper (or outer shell) sections. The combing bevel wheels may be enclosed by a rubber sleeve or gaiter (also called boot), which in this case would not transfer forces but only cover the area of the outer surface of the spray nozzle between the bevel wheels. In both cases, the rubber sleeve or gaiter undergoes a contraction-expansion cycle during the rotation, which leads to a self-cleaning of its surface.

The scraper and/or each scraper section may comprise one or multiple scraping elements. The scraping element(s) of the scraper/scraper section may be interconnected to each other/itself by supporting means for giving the scraper the desired stability. Each scraping element may be for example embodied by a wire. Alternatively, the scraping element may be embodied by a plate, in which case a preferably sharp edge of the plate is moved relative to the surface of the spray nozzle.

For example, the scraping element may be a longitudinally extending scraping element extending in a longitudinal direction of the outer surface of the spray nozzle and therefore parallel to the longitudinal axis of the spray nozzle. In particular, if the outer shell is moveable and the scraper is stationary, it might be sufficient that there is exactly one longitudinally extending scraping element which extends along the whole surface of the outer shell within the reactor. In a further embodiment, multiple parallelly arranged and longitudinally extending scraping elements may be embodied, wherein adjacent longitudinally extending scraping elements might be connected via circumferentially extending scraping elements or connecting elements, which extend in a circumferential direction of the outer surface and which raise the stability of the scraper.

At least one circumferentially extending scraping element may extend in a circumferential direction of the spray nozzle, in particular if the scraper and the outer surface are moveable to each other in a longitudinal direction of the spray nozzle. Such a circumferentially extending scraping element may have a curved scraping edge, which curvature corresponds to the curvature of the outer surface in the circumferential direction.

At least one scraping element may also extend around the outer surface of the spray nozzle in a helically extending manner, in particular along the whole lengths of the outer surface within the reactor. In order to give the scraper the desired stability and/or in order to provide additional scraping abilities longitudinally extending scraping or supporting elements may interconnect the in particular exactly one helically extending scraping element with itself.

The scraper may also comprise at least one end face scrapping element. The end face scraping element may be connected to or integrally formed with at least one of the before described scraping elements, whereas the end face scraping element is arranged at the end face of the spray nozzle. For a stable arrangement during the relative movement the end face scraping element may be mechanically supported on the end face of the stationary housing close to the spray opening, in particular when the outer shell is moveable.

In order to avoid greater depositions permanently, the outer shell and the scraper may be moved relative to each other permanently. But, in order to save energy, the relative movement may be initiated only in predefined time intervals or when deposition/contaminations are detected. It may also be possible that the movement is initiated, when a predetermined amount of dry sorbent was injected into the reactor.

Preferably, the dry sorbent injection system is arranged upstream to the spray nozzle.

The reactor may comprise a control unit, which is connected with the drive of the scraper and/or of the outer surface/outer shell.

The reactor for cleaning flue gases is in particular arranged in a vertical manner. Accordingly, the flue gas inlet is arranged at the very bottom of the reactor, meaning that there is preferably no means for collecting residuals below the flue gas inlet.

Usually, the flue gas is provided through a duct from a combustion chamber, which duct leads in a horizontal manner to the flue gas inlet of the reactor.

In such a vertical reactor, the flue gas outlet is arranged vertically above the flue gas inlet, so that the reactor can be considered that part, in which the flue gas advances vertically from the bottom to the top. The reactor is delimited by a reactor wall, through which the spray nozzle may extend.

A dry sorbent (i.e. CaO or Ca(OH)₂ powder) is provided by the dry sorbent injection system into the reactor. The location(s) at which the dry sorbent comes into contact with the flue gas and is advanced from thereon with the flue gas through the reactor is considered the dry sorbent outlet. The spray nozzle of the liquid injection system may be arranged upstream to the dry sorbent injection system. But, it is preferred that the liquid injection system is arranged downstream of the dry sorbent injection system, which enhances the desulfurization efficiency.

In a preferred embodiment, the liquid injection system comprises two or more, for example four, more than four, six or even more than six spray nozzles each being associated with a scraper as described above.

The invention and the technical background will now be described with reference to the figures. The figures show schematically
- Figure 1:: a cross sectional view through a reactor,
- Figure 2:: the part of a first embodiment of a spray nozzle arranged within the reactor in a cross sectional view,
- Figure 3:: the tip of the nozzle of figure 2 in perspective view,
- Figure 4:: the part of a further embodiment of a spray nozzle arranged within the reactor in cross sectional view,
- Figure 5:: the tip of the nozzle of figure 4 in perspective view,
- Figure 6:: a perspective view of a tip of a further embodiment of a spray nozzle,
- Figure 7:: the part of an even further embodiment of a spray nozzle arranged within the reactor in cross sectional view with a gear between two scraper sections and
- Figure 8:: an alternative embodiment of a gear.

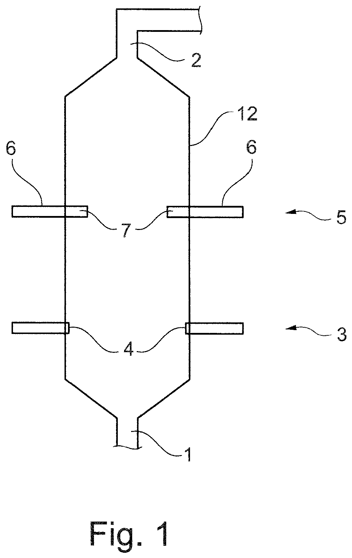

Figure 1 schematically depicts a reactor for cleaning flue gases. The reactor comprises a flue gas inlet 1 at the bottom and an outlet 2 at its top. Flue gases from a combustion chamber may flow more or less upwardly from the flue gas inlet 1 to the outlet 2. A dry sorbent injection system 3 comprising a dry sorbent outlet 4 is arranged such that a dry sorbent (i.e. CaO or Ca(OH)₂ powder) can be injected through the dry sorbent injection system 3 into the reactor.

A liquid injection system 5 for injecting atomized water is arranged above/downstream of the dry sorbent injection system 3. The liquid injection system 5 comprises multiple spray nozzles 6 which extend through a reactor wall 12 and which comprise a spray opening 7 for atomizing the water. In use, the dry sorbent or other components of the flue gas may deposit on the outer surface of the spray nozzles 6 within the reactor, thereby eventually negatively effecting the spray pattern of the spray nozzle 6.

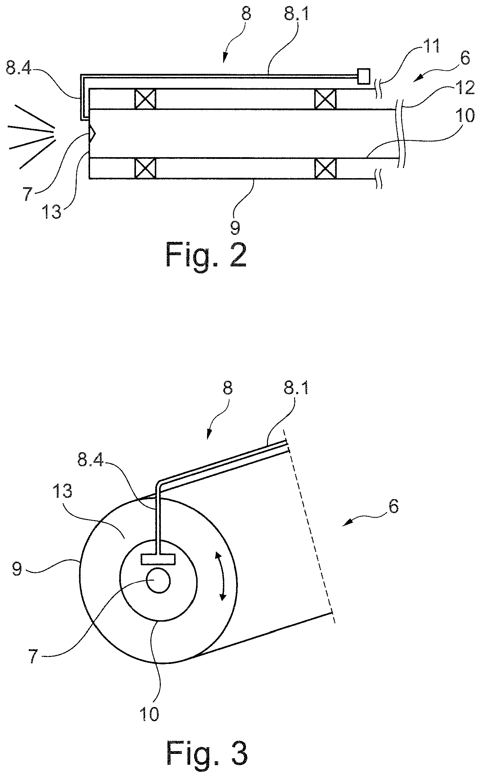

The present invention suggests to remove the deposition/contaminations on the outer surface by moving the outer surface and a scraper 8 relative to each other. Accordingly, in figures 2 to 8 the part of a nozzle 6 arranged within the reactor is depicted.

The depicted nozzles 6 comprise an inner tube, which is also referred to as stationary housing 10. The stationary housing 10/inner tube fluidly connects an inlet for the water arranged outside the reactor to the spray opening 7 of the nozzle 6. The spray opening 7 is arranged in a front end face 13 of the nozzle 6. The inner pipe/stationary housing 10 extends through the reactor wall 12.

According to the depicted embodiments the stationary housing 10 is surrounded by an outer shell 9, which surrounds the stationary housing 10 in a circumferential direction within the reactor, wherein the outer shell 9 extends from the reactor wall 12 to the front end face 13 of the inner tube/stationary housing 10.

A scraper 8 is arranged outside the outer shell 9 within the reactor.

The outer shell 9 and the scraper 8 can be provided as a retrofit kit for an already installed spray nozzle 6.

According to the embodiment depicted in figures 2 and 3 the outer shell 9 is mounted in a rotatable manner around the stationary housing 10. **In** order to support the outer shell 9 a bearing 11 surrounding the stationary housing 10 in a circumferential direction is mounted to the reactor wall 12. The outer shell 9 is also supported by bearings between the inside of the outer shell 9 and the outside of the stationary housing 10. In this embodiment, the scraper 8 comprises one longitudinally extending scraping element 8.1, at which end an end face scraping element 8.4 is embodied. The scraper 8 is mounted in a stationary manner. During operation the outer shell 9 may be driven to a rotational movement, so that the outer surface of the outer shell 9 is advanced along the scraper 8, whereby contamination/depositions on the outer surface are scraped off.

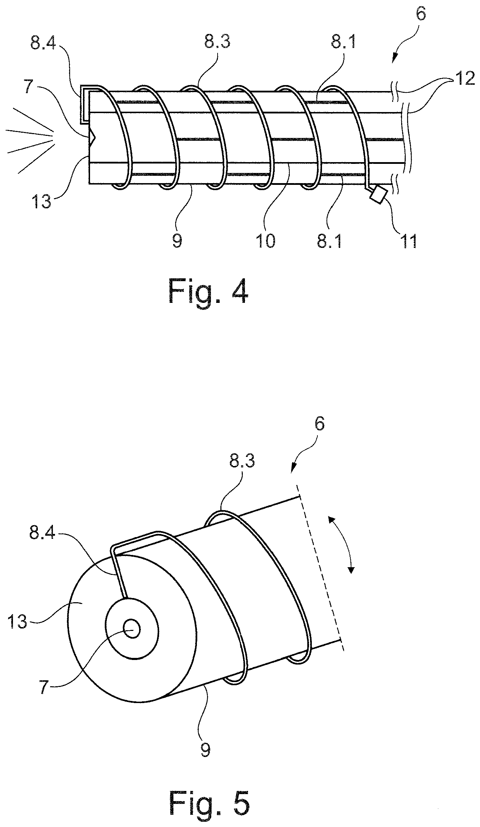

According to the embodiments depicted in figures 4 to 6 the outer shell 9 is mounted in a stationary manner to the reactor wall 12, thereby surrounding the stationary housing 10 inside the reactor. In these embodiments, the scrapers 8 are mounted in a moveable manner, so that they can be rotated around the outer surface of the outer shell 9. For mounting the scraper 8 a bearing 11 connected to the inside of the reactor wall 12 surrounds the outer shell 9.

According to the embodiment depicted in figure 4 and 5 the scraper 8 comprises one helically extending scraping element 8.3, at which end an end face scraping element 8.4 is arranged. The end face scraping element 8.4 extends partly radially inwards towards the spray opening 7. In order to further enhance the scraping process and in order to provide a greater stability, the helically extending scraping element 8.3 is connected to itself by multiple longitudinally extending scraping elements 8.1.

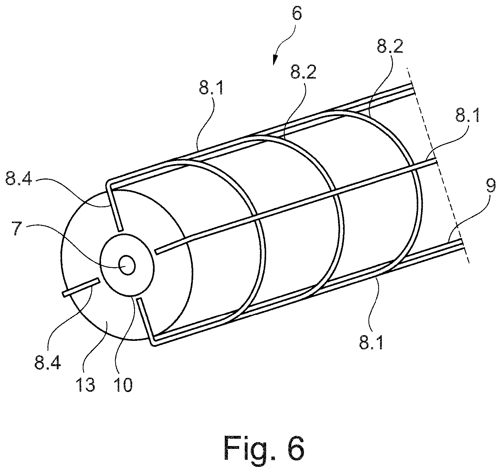

According to the embodiment depicted in figure 6 the scraper 8 comprises four longitudinally extending scraping elements 8.1 extending parallel to each other and interconnected by circumferentially extending scraping elements 8.2. An end face scraping element 8.4 is connected to the end of each longitudinal extending scraping element 8.1.

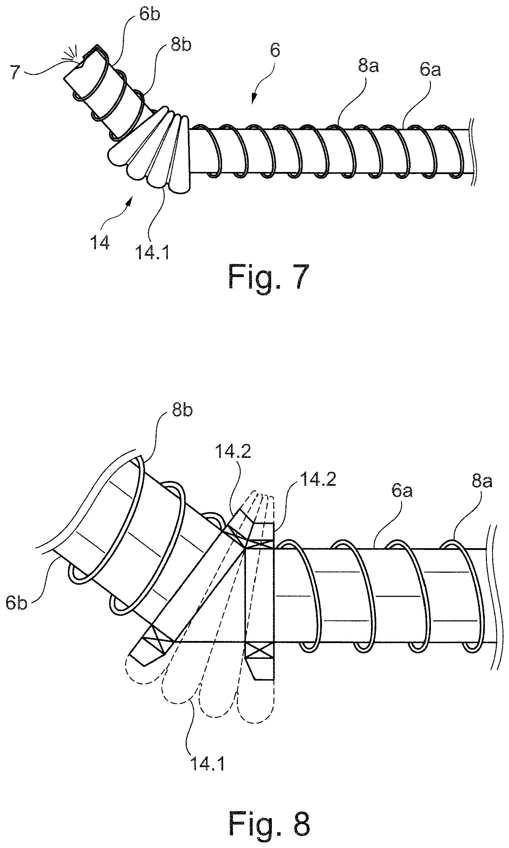

According to the embodiments depicted in figures 7 and 8 the spray nozzle 6 has a first spray nozzle section 6a and a second spray nozzle section 6b inclined about 45° to the first spray nozzle section 6a. Also, the scraper 8 has a first scraper section 8a assigned to the first spray nozzle section 6a and a second scraper section 8b assigned to the second spray nozzle section 6b. The first spray nozzle section 6a is mounted in a horizontal manner so that the liquid is injected with an angle of 45° to the main flow direction of the flue gas through the spray opening 7 at an end face of the second spray nozzle section 6b. Each scraper section 8a, 8b may embodied as described with regard to the above linearly extending spray nozzles 6.

The first scraper section 8a is coupled to the second scraper section 8b by a gear 14, transferring a driven rotational movement of the first scraper section 8a into a rotational movement of the second scraper section 8b.

According to the embodiment in figure 7 the gear is embodied as a rubber sleeve 14.1, which ends are connected to the respective scraper sections 8a, 8b. This way the rotational forces from the first scraper section 8a are transferred to the scraper section 8b via the rubber sleeve 14.

According to the embodiment in figure 8 the gear comprises two bevel wheels 14.2 combing with each other. The bevel wheels 14.2 are connected to one end of the respective scraper sections 8a, 8b. The bevel wheels 14.2 are enclosed by a rubber sleeve 14.1. In this case the rotational forces are only transferred by the bevel wheels 14.1. In both cases, the rubber sleeve 14.1 undergoes a contraction-expansion cycle during the rotation, which leads to a self-cleaning of its surface.

With the present invention depositions/contaminations on the outer surface of a spray nozzle 6 can be removed during operation without the need of shutting down the reactor.

### Reference list

- 1: flue gas inlet
- 2: outlet
- 3: dry sorbent injection system
- 4: dry sorbent outlet
- 5: liquid injection system
- 6: spray nozzle
- 6a: first spray nozzle section
- 6b: second spray nozzle section
- 7: spray opening
- 8: scraper
- 8.1: longitudinally extending scraping element
- 8.2: circumferentially extending scraping element
- 8.3: helically extending scraping element
- 8.4: end face scraping element
- 8a: first scraper section
- 8b: second scraper section
- 9: outer shell
- 10: stationary housing
- 11: bearing
- 12: reactor wall
- 13: front end face
- 14: gear
- 14.1: rubber sleeve
- 14.2: bevel wheel

## Claims

1. Reactor for cleaning flue gases by injecting dry or quasi-dry sorbent into a flue gas stream, comprising
- a flue gas inlet (1) at the bottom of the reactor,
- an outlet (2) at the top of the reactor,
- a dry sorbent injection system (3) with at least one dry sorbent outlet (4) for injecting dry sorbent into the reactor, the at least one dry sorbent outlet (4) being arranged between the flue gas inlet (1) and the outlet (2), and
- at least one liquid injection system (5), the liquid injection system (5) comprising at least one spray nozzle (6) having at least one spray opening (7) for supplying atomized liquid into the reactor between the flue gas inlet (1) and the outlet (2),
**characterized in that**
at least one scraper (8) is arranged outside an outer surface of the spray nozzle (6), wherein the outer surface and the scraper (8) are moveable relative to each other, wherein the relative movement is a rotational movement around a central axis of the spray nozzle (6).

2. Reactor according to claim 1, wherein the outer surface is moveable and the scraper (8) is stationary.

3. Reactor according to claim 2, wherein the outer surface is embodied by an outer shell (9) which is moveable with regard to a stationary housing (10) of the spray nozzle (6).

4. Reactor according to claim 3, wherein the outer shell (9) surrounds the stationary housing (10) only inside the reactor, wherein a bearing (11) for supporting the movement of the outer shell (9) surrounds the stationary housing (10) and is arranged on an inside of a reactor wall (12).

5. Reactor according to claim 1, wherein the scraper (8) is moveable and the outer surface is stationary.

6. Reactor according to claim 5, wherein a bearing (11) for supporting the movement of the scraper (8) surrounds the spray nozzle (6) and wherein the bearing (11) is arranged on an inside of a reactor wall (12).

7. Reactor according to one of the preceding claims, wherein the scraper (8) extends to a front end face (13) of the spray nozzle (6).

8. Reactor according to one of the preceding claims, wherein the scraper (8) extends along the whole length of the outer surface within the reactor.

9. Reactor according to one of the preceding claims, wherein the spray nozzle (6) has a first spray nozzle section (6a) and a second spray nozzle section (6b) cranked to the first spray nozzle section (6a), wherein the scraper (8) has a first scraper section (8a) assigned to the first spray nozzle section (6a) and a second scraper section (8b) assigned to the second spray nozzle section (6b).

10. Reactor according to claim 9, wherein the first scraper section (8a) is coupled to the second scraper section (8b) by a gear (14), transferring a driven rotational movement of the first scraper section (8a) into a rotational movement of the second scraper section (8b).

11. Reactor according to one of the preceding claims, wherein the scraper (8) comprises at least one component of the following group:
- at least one longitudinally extending scraping element (8.1) extending in a longitudinal direction of the outer surface,
- at least one circumferentially extending scraping element (8.2) extending in a circumferential direction of the outer surface,
- at least one helically extending scraping element (8.3) extending around the outer surface in helically manner,
- at least one end face scraping element (8.4) associated with an end face of the spray nozzle (6).

12. Reactor according to one of the preceding claims, wherein the outer shell (9) or the scraper (8) is connected to a drive for moving the outer shell (9) or the scraper (8).

13. Reactor according to one of the preceding claims, wherein the dry sorbent injection system (3) is arranged upstream to the spray nozzle (6).

14. Method for operating a reactor for cleaning flue gases, comprising the following steps:
- Supplying a flue gas at the bottom of the reactor,
- Supplying a dry sorbent into the reactor, and
- Supplying atomized liquid through a spray opening (7) of a spray nozzle (6) into the reactor,
**characterized by**
removing contaminations on an outer surface of the spray nozzle (6) by moving a scraper (8) and the outer surface of the spray nozzle (6) relative to each other, wherein the relative movement is a rotational movement around a central axis of the spray nozzle (6).

## Patentansprüche

1. Reaktor zur Reinigung von Rauchgasen durch Einspritzen von trockenem oder quasitrockenem Sorptionsmittel in einen Rauchgasstrom, umfassend
- einen Rauchgaseinlass (1) am Boden des Reaktors,
- einen Auslass (2) am oberen Ende des Reaktors,
- ein Einspritzsystem für trockenes Sorptionsmittel (3) mit mindestens einem Auslass für trockenes Sorptionsmittel (4) zum Einspritzen von trockenem Sorptionsmittel in den Reaktor, wobei der mindestens eine Auslass für trockenes Sorptionsmittel (4) zwischen dem Rauchgaseinlass (1) und dem Auslass (2) angeordnet ist, und
- mindestens ein Flüssigkeitseinspritzsystem (5), wobei das Flüssigkeitseinspritzsystem (5) mindestens eine Sprühdüse (6) mit mindestens einer Sprühöffnung (7) zur Zufuhr von zerstäubter Flüssigkeit in den Reaktor zwischen dem Rauchgaseinlass (1) und dem Auslass (2) umfasst,
**dadurch gekennzeichnet, dass**
mindestens ein Abstreifer (8) außerhalb einer Außenfläche der Sprühdüse (6) angeordnet ist, wobei die Außenfläche und der Abstreifer (8) relativ zueinander beweglich sind, wobei die relative Bewegung eine Drehbewegung um eine zentrale Achse der Sprühdüse (6) ist.

2. Reaktor nach Anspruch 1, wobei die Außenfläche beweglich und der Abstreifer (8) ortsfest ist.

3. Reaktor nach Anspruch 2, wobei die Außenfläche durch einen Außenmantel (9) verkörpert ist, der gegenüber einem ortsfesten Gehäuse (10) der Sprühdüse (6) beweglich ist.

4. Reaktor nach Anspruch 3, wobei der Außenmantel (9) das ortsfeste Gehäuse (10) nur innerhalb des Reaktors umgibt, wobei ein Lager (11) zur Unterstützung der Bewegung des Außenmantels (9) das ortsfeste Gehäuse (10) umgibt und an einer Innenseite einer Reaktorwand (12) angeordnet ist.

5. Reaktor nach Anspruch 1, wobei der Abstreifer (8) beweglich ist und die Außenfläche ortsfest ist.

6. Reaktor nach Anspruch 5, wobei ein Lager (11) zur Unterstützung der Bewegung des Abstreifers (8) die Sprühdüse (6) umgibt und wobei das Lager (11) an einer Innenseite einer Reaktorwand (12) angeordnet ist.

7. Reaktor nach einem der vorhergehenden Ansprüche, wobei sich der Abstreifer (8) bis zu einer vorderen Endfläche (13) der Sprühdüse (6) erstreckt.

8. Reaktor nach einem der vorhergehenden Ansprüche, wobei sich der Abstreifer (8) über die gesamte Länge der Außenfläche innerhalb des Reaktors erstreckt.

9. Reaktor nach einem der vorhergehenden Ansprüche, wobei die Sprühdüse (6) einen ersten Sprühdüsenabschnitt (6a) und einen zum ersten Sprühdüsenabschnitt (6a) gekröpften zweiten Sprühdüsenabschnitt (6b) aufweist, wobei der Abstreifer (8) einen dem ersten Sprühdüsenabschnitt (6a) zugeordneten ersten Abstreiferabschnitt (8a) und einen dem zweiten Sprühdüsenabschnitt (6b) zugeordneten zweiten Abstreiferabschnitt (8b) aufweist.

10. Reaktor nach Anspruch 9, wobei der erste Abstreifabschnitt (8a) mit dem zweiten Abstreifabschnitt (8b) über ein Getriebe (14) gekoppelt ist, das eine angetriebene Drehbewegung des ersten Abstreifabschnitts (8a) in eine Drehbewegung des zweiten Abstreifabschnitts (8b) überträgt.

11. Reaktor nach einem der vorhergehenden Ansprüche, wobei der Abstreifer (8) mindestens eine Komponente aus der folgenden Gruppe umfasst:
- mindestens ein sich in Längsrichtung erstreckendes Abstreifelement (8.1), das sich in Längsrichtung der Außenfläche erstreckt,
- mindestens ein sich in Umfangsrichtung erstreckendes Abstreifelement (8.2), das sich in einer Umfangsrichtung der Außenfläche erstreckt,
- mindestens ein schraubenförmig verlaufendes Abstreifelement (8.3), das sich schraubenförmig um die Außenfläche herum erstreckt,
- mindestens ein stirnseitiges Abstreifelement (8.4), das mit einer Stirnfläche der Sprühdüse (6) verbunden ist.

12. Reaktor nach einem der vorhergehenden Ansprüche, wobei der Außenmantel (9) oder der Abstreifer (8) mit einem Antrieb zum Bewegen des Außenmantels (9) oder des Abstreifers (8) verbunden ist.

13. Reaktor nach einem der vorhergehenden Ansprüche, wobei das Einspritzsystem für das trockene Sorptionsmittel (3) stromaufwärts der Sprühdüse (6) angeordnet ist.

14. Verfahren zum Betreiben eines Reaktors zur Reinigung von Rauchgasen, das die folgenden Schritte umfasst:
- Zuführen eines Rauchgases am Boden des Reaktors,
- Zuführen eines trockenen Sorptionsmittels in den Reaktor, und
- Zuführen von zerstäubter Flüssigkeit durch eine Sprühöffnung (7) einer Sprühdüse (6) in den Reaktor,
**gekennzeichnet durch**
das Entfernen von Verunreinigungen auf einer Außenfläche der Sprühdüse (6) durch Bewegen eines Abstreifers (8) und der Außenfläche der Sprühdüse (6) relativ zueinander, wobei die relative Bewegung eine Drehbewegung um eine zentrale Achse der Sprühdüse (6) ist.

## Revendications

1. Réacteur pour nettoyer des gaz de combustion en injectant un sorbant sec ou quasi-sec dans un flux de gaz de combustion, comprenant :
- une entrée de gaz de combustion (1) au fond du réacteur,
- une sortie (2) sur le dessus du réacteur,
- un système d'injection de sorbant sec (3) avec au moins une sortie de sorbant sec (4) pour injecter du sorbant sec dans le réacteur, l'au moins une sortie de sorbant sec (4) étant agencée entre l'entrée de gaz de combustion (1) et la sortie (2), et
- au moins un système d'injection de liquide (5), le système d'injection de liquide (5) comprenant au moins une buse de pulvérisation (6) ayant au moins une ouverture de pulvérisation (7) pour fournir du liquide atomisé dans le réacteur entre l'entrée de gaz de combustion (1) et la sortie (2),
**caractérisé en ce que**
au moins un racloir (8) est agencé en-dehors d'une surface extérieure de la buse de pulvérisation (6), dans lequel la surface extérieure et le racloir (8) sont mobiles l'un par rapport à l'autre, dans lequel le mouvement relatif est un mouvement de rotation autour d'un axe central de la buse de pulvérisation (6).

2. Réacteur selon la revendication 1, dans lequel la surface extérieure est mobile et le racloir (8) est fixe.

3. Réacteur selon la revendication 2, dans lequel la surface extérieure est enchâssée par une coque extérieure (9) qui est mobile par rapport à un logement fixe (10) de la buse de pulvérisation (6).

4. Réacteur selon la revendication 3, dans lequel la coque extérieure (9) entoure le logement fixe (10) uniquement à l'intérieur du réacteur, dans lequel un palier (11) pour supporter le mouvement de la coque extérieure (9) entoure le logement fixe (10) et est agencé sur un intérieur d'une paroi de réacteur (12).

5. Réacteur selon la revendication 1, dans lequel le racloir (8) est mobile et la surface extérieure est fixe.

6. Réacteur selon la revendication 5, dans lequel un palier (11) pour supporter le mouvement du racloir (8) entoure la buse de pulvérisation (6) et dans lequel le palier (11) est agencé sur un intérieur d'une paroi de réacteur (12).

7. Réacteur selon l'une des revendications précédentes, dans lequel le racloir (8) s'étend vers une face d'extrémité avant (13) de la buse de pulvérisation (6).

8. Réacteur selon l'une des revendications précédentes, dans lequel le racloir (8) s'étend sur toute la longueur de la surface extérieure à l'intérieur du réacteur.

9. Réacteur selon l'une des revendications précédentes, dans lequel la buse de pulvérisation (6) présente une première section de buse de pulvérisation (6a) et une seconde section de buse de pulvérisation (6b) coudée sur la première section de buse de pulvérisation (6a), dans lequel le racloir (8) présente une première section de racloir (8a) assignée à la première section de buse de pulvérisation (6a), et une seconde section de racloir (8b) assignée à la seconde section de buse de pulvérisation (6b).

10. Réacteur selon la revendication 9, dans lequel la première section de racloir (8a) est couplée à la seconde section de racloir (8b) par un engrenage (14), transférant un mouvement de rotation entraînée de la première section de racloir (8a) en un mouvement de rotation de la seconde section de racloir (8b).

11. Réacteur selon l'une des revendications précédentes, dans lequel le racloir (8) comprend au moins une composante du groupe suivant :
- au moins un élément de raclage (8.1) s'étendant longitudinalement s'étendant dans une direction longitudinale de la surface extérieure,
- au moins un élément de raclage (8.2) s'étendant de manière circonférentielle s'étendant dans une direction circonférentielle de la surface extérieure,
- au moins un élément de raclage (8.3) s'étendant de manière hélicoïdale, s'étendant de manière hélicoïdale autour de la surface extérieure,
- au moins un élément de raclage (8.4) de face d'extrémité associé à une face d'extrémité de la buse de pulvérisation (6).

12. Réacteur selon l'une des revendications précédentes, dans lequel la coque extérieure (9) du racloir (8) est connectée à un entraînement pour déplacer la coque extérieure (9) du racloir (8).

13. Réacteur selon l'une des revendications précédentes, dans lequel le système d'injection de sorbant sec (3) est agencé en amont de la buse de pulvérisation (6).

14. Procédé de fonctionnement d'un réacteur pour nettoyer des gaz de combustion, comprenant les étapes suivantes :
- fournir un gaz de combustion au bas du réacteur,
- fournir un sorbant sec dans le réacteur, et
- fournir du liquide atomisé à travers une ouverture de pulvérisation (7) d'une buse de pulvérisation (6) jusque dans le réacteur,
**caractérisé par**
le retrait de contaminations sur une surface extérieure de la buse de pulvérisation (6) en déplaçant un racloir (8) et la surface extérieure de la buse de pulvérisation (6) l'un par rapport à l'autre, dans lequel le mouvement relatif est un mouvement de rotation sur un axe central de la buse de pulvérisation (6).
